(19) Europäisches Patentamt

European Patent Office

Office européen des brevets

(11) **EP 0 861 549 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: **96927513.0**

(22) Anmeldetag: **24.07.1996**

(51) Int Cl.7: **H04L 27/26**

(86) Internationale Anmeldenummer:
**PCT/DE1996/001350**

(87) Internationale Veröffentlichungsnummer:
**WO 1997/019542 (29.05.1997 Gazette 1997/23)**

(54) **VERFAHREN ZUR SYNCHRONISIERUNG EINES EMPFÄNGERS FÜR DIGITALE SIGNALE**

METHOD OF SYNCHRONIZING A DIGITAL SIGNAL RECEIVER

PROCEDE DE SYNCHRONISATION D'UN RECEPTEUR DE SIGNAUX NUMERIQUES

(84) Benannte Vertragsstaaten:
**CH DE DK ES FR GB IT LI NL SE**

(30) Priorität: **17.11.1995 DE 19542991**

(43) Veröffentlichungstag der Anmeldung:
**02.09.1998 Patentblatt 1998/36**

(73) Patentinhaber: **ROBERT BOSCH GMBH**
**70442 Stuttgart (DE)**

(72) Erfinder: **BOLLE, Michael**
**D-30880 Rethen (DE)**

(56) Entgegenhaltungen:
**EP-A- 0 529 421          WO-A-95/05042**
**US-A- 5 018 091**

EP 0 861 549 B1

## Beschreibung

Stand der Technik

Die Erfindung geht von einem Verfahren zur genauen zeitlichen Synchronisierung eines Empfängers für digitale Signale nach der Gattung der unabhängigen Ansprüche aus. Aus der DE 41 28 713 A1 ist ein Verfahren bekannt, bei dem eine Korrekturinformation zur Synchronisierung des Empfängers aus der Lage eines ersten signifikanten Energieanteils in der Kanalimpulsantwort abgeleitet wird. Die Kanalimpulsantwort wird dabei mit Hilfe einer inversen schnellen Fouriertransformation (IFFT) aus den Abstastwerten der Kanalfrequenzantwort ermittelt. Eine Schätzung der Kanalfrequenzantwort läßt sich dabei aus der Korrelation eines empfangenen Referenzsignals mit einem im Empfänger abgespeicherten Referenzsignal berechnen. Bei dem bekannten Verfahren werden die notwendigen Berechnungen für die inverse Fouriertransformation und die Bestimmung der Korrekturinformation aus der Kanalimpulsantwort in einem separaten Signalprozessor durchgeführt.

Vorteile der Erfindung

Das erfindungsgemäße Verfahren besitzt demgegenüber den Vorteil, daß die Korrekturinformation zur Synchronisierung des Empfängers direkt aus den Abtastwerten der Kanalfrequenzantwort berechnet wird, so daß sich die explizite Berechnung der Kanalimpulsantwort über die hinsichtlich der erforderlichen Rechenkapazität und des benötigten Speichers aufwendigen inversen Fouriertransformationen (IFFT) erübrigt. Damit wird auch der bei Empfängern nach der Stand der Technik erforderliche separate Signalprozessor zur Berechnung der IFFT und zur Bestimmung der Korrekturinformation im Zeitbereich überflüssig.
Ein weiterer Vorteil des erfindungsgemäßen Verfahrens ist darin zu sehen, daß die Bestimmung der Korrekturinformation aus dem Schwerpunkt der quadrierten Kanalimpulsantwort genauere und weniger störanfällige Ergebnisse liefert als die Bestimmung der Lage des ersten signifikanten Energieanteils in der Kanalimpulsantwort, da bei dem erfindungsgemäßen Verfahren über eine Vielzahl von Werten gemittelt wird.
In den Unteransprüchen sind vorteilhafte Weiterbildungen des erfindungsgemäßen Verfahrens beschrieben.
So ermöglicht Anspruch 2 die Berechnung der Korrekturinformation nach einem gegenüber dem in Anspruch 1 angegebenen vereinfachten Verfahren, für das eine vorteilhafte, weil einfach zu realisierende Vorrichtung im unabhängigen Anspruch 6 beschrieben ist. In Anspruch 3 wird eine weitere Vereinfachung unter Rückgriff auf den aus der Literatur bekannten CORDIC-Algorithmus angegeben.
Weitere vorteilhafte Weiterbildungen der erfindungsgemäßen Verfahren, die in den Ansprüchen 4 und 5 beschrieben sind, ergeben sich durch weitere Vereinfachungen. Diese ermöglichen, die zur Bestimmung der Korrekturinformation erforderlichen Berechnungen mit einem Minimum an schaltungstechnischem Aufwand zu realisieren. Eine Vorrichtung zu dem Verfahren nach Anspruch 4, die nur geringen Schaltungsaufwand erfordert, ist im unabhängigen Anspruch 7 angegeben.

Zeichnungen

Ausführungsbeipiele der Erfindung sind in der Zeichnung dargestellt und in der nachfolgenden Beschreibung näher erläutert. Es zeigen Figur 1 eine Vorrichtung zur Umsetzunh des Verfahrens gemäß Anspruch 3, Figur 2 eine vorteilhafte schaltungstechnische Realisierung für den an sich bekannten CORDIC-Algorithmus und Figur 3 eine Schaltung zur Umsetzung der mit dem CORDIC-Algorithmus bestimmten Werte in die gewünschte Korrekturinformation.

Beschreibung der Erfindung

Der vorliegenden Erfindung liegt die Aufgabe der genauen zeitlichen Synchronisierung eines Empfängers für digitale Signale unter Vermeidung der bei Empfängern nach dem Stand der Technik verwendeten rechenintensiven inversen Fouriertransformation zugrunde. Zur Implementierung der genauen Zeitsynchronisation in einem Empfänger wird durch Korrelation eines empfangenen Referenzsymbols mit einem im Empfänger abgelegten Referenzsymbol die Frequenzantwort des Kanals auf dem verwendeten Raster der diskreten Fouriertransformation ermittelt. Eine Näherung für den Schwerpunkt der quadrierten Kanalimpulsantwort läßt sich mit Hilfe des Zusammenhangs

$$\bar{l} = j\frac{N}{2\pi}\frac{\sum_{k=0}^{N-1}H_k(H_k^* - H_{k-1}^*)}{\sum_{k=0}^{N-1}H_kH_k^*} = j\frac{N}{2\pi}\left[1 - \frac{\sum_{k=0}^{N-1}H_kH_{k-1}^*}{\sum_{k=0}^{N-1}H_kH_k^*}\right] \tag{1}$$

aus den komplexen Abtastwerten der Kanalfrequenzantwort, die hier wie im folgenden mit $H_k$, k=0,...N-1 bezeichnet werden, berechnen. N ist dabei die Länge der verwendeten schnellen Fouriertransformation (FFT) und entspricht der Anzahl der komplexen Abtastwerte der Kanalfrequenzantwort. Aufgrund der verwendeten Näherungen ist der gemäß Formel (1) ermittelte Wert im allgemeinen komplex und muß daher auf geeignete Weise einem rellen Wert zugeordnet werden. Dies kann mittels

$$\tilde{l} = sign\left(\mathrm{Re}\ \bar{l}\right)\left|\bar{l}\right| \tag{2}$$

geschehen. Die Synchronisationsinformation wird dabei vorzeichenrichtig ermittelt. Eine Analyse der Gleichung (1) zugrundeliegenden Approximationen zeigt, daß die eingeführten Fehler den gewünschten Wert $\bar{l}$ in Form einer Sinusverzerrung verfälschen, wobei der Fehler insbesondere für betragsmäßig große Werte ($\bar{l}>>1$) groß wird. Die durch die Approximation 2 eingeführten Verzerrungen können durch eine nicht lineare Kennlinie der Form

$$\hat{l} = \frac{N}{\pi}\arcsin\left(\tilde{l}\ \frac{\pi}{N}\right) \tag{3}$$

weitgehend rückgängig gemacht werden, wobei $\hat{l}$ die gewünschte Information über den auszugleichenden zeitlichen Versatz des Empfangsfensters des Empfängers darstellt- Die Realisierung der nichtlinearen Kennlinie gemäß Gleichung (3) kann effizient mittels einer Tabelle und Interpolation der in der Tabelle abgelegten Werte durchgeführt werden.

Eine Verbesserung des oben genannten Verfahrens kann durch die Beobachtung erfolgen, daß der in Gleichung (1) auftretende Term

$$\frac{\sum_{k=0}^{N-1}H_kH_{k-1}^*}{\sum_{k=0}^{N-1}H_kH_k^*}$$

für reale Kanäle betragsmäßig durch den Wert 1 approximiert werden kann, so daß

$$\frac{\sum_{k=0}^{N-1}H_kH_{k-1}^*}{\sum_{k=0}^{N-1}H_kH_k^*} \approx \exp(j\Theta) \tag{4}$$

gilt. Damit erhält man für eine Näherung des Schwerpunktes der quadrierten Kanalimpulsantwort

$$\hat{l} = \frac{N}{2\pi}\Theta, \qquad (5)$$

wobei die Berechnung des Winkels $\Theta$ lediglich die Berechnung des Terms

$$\Theta = \angle\left(\sum_{k=0}^{N-1} H_k H_{k-1}^*\right) \qquad (6)$$

erfordert, da der in Gleichung (4) auftretende Nennerterm rein reell ist. $\Theta$ ist dabei der Phasenwinkel der Summe über das Produkt der Abtastwerte der Kanalfrequenzantwort mit dem jeweils um eine Taktzeit verzögerten konjugiert komplexen Wert. Die Berechnung des Winkels kann mit Hilfe des CORDIC-Algorithmus erfolgen, für den auch sehr effiziente Hardwarerealisierungen vorliegen. Bei der Anwendung dieses Verfahrens ist zu beachten, daß hier nur die Phase der am Eingang der CORDIC-Baugruppe anliegenden komplexen Zahl bestimmt werden muß - und nicht zusätzlich der Betrag, der für die vorliegende Aufgabe unerheblich ist.

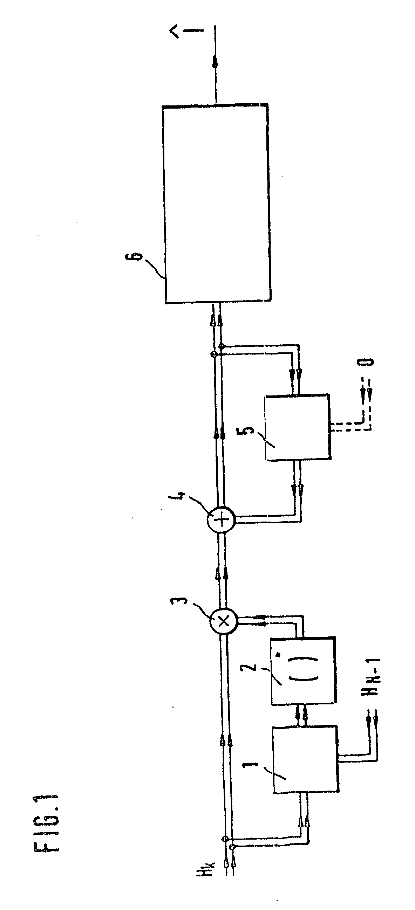

Eine geeignete Schaltung zur Bestimmung der Korrekturinformation $\hat{l}$ nach dem oben beschriebenen Verfahren ist in Figur 1 dargestellt. Der Eingang der Schaltung ist zum einen direkt mit einem Multiplizierer 3, zum anderen über einen Speicher 1, der den anstehenden Wert für eine Taktperiode speichert und nach Ablauf der Taktperiode weitergibt, und eine Schaltungseinheit 2 zur Bildung des konjugiert Komplexen des Eingangssignals mit dem zweiten Eingang des Multiplizierers 3 verbunden. Der Ausgang des Multiplizierers 3 ist einem Addierer 4 zugeführt, auf dessen zweiten Eingang das Summensignal vom Ausgang des Addierers 4 über einen zweiten Speicher 5 rückgekoppelt ist. Der Ausgang des Addierers 4 ist mit einer Schaltungseinheit 6 verbunden, die der Bestimmung des Phasenwinkels $\Theta$ des komplexen Summensignals dient, und an deren Ausgang nach Abschluß der notwendigen Berechnungen die Korrekturinformation abgreifbar ist.

Die Schaltung nach Figur 1 funktioniert wie folgt. Zu Beginn des Ablaufs werden die beiden Speicherelemente (1,5) mit den Werten $H_{N-1}$ für das erste Speicherelement 1 und 0 für das zweite Speicherelement 5 initialisiert. Die komplexen Abtastwerte der Kanalfrequenzantwort $H_k$ für k=0,..., N-1 werden der Schaltung nacheinander Wert für Wert zugeführt. Im ersten Speicher 1 werden die Werte für eine Taktperiode zwischengespeichert, d.h. um die Dauer einer Taktperiode verzögert und anschließend in der Schaltungseinheit 2 durch Invertierung ihres Imaginärteils konjugiert. Im Multiplizierer 3 werden die verzögerten und konjugierten Werte mit den direkt dem Multiplizierer 3 zugeführten Werten multipliziert. Die Anordnung aus Addierer 4 und zweiter Speichereinheit 5 akkumuliert die in dem Multiplizierer 3 gebildeten Werte $H_k H_{k-1}^*$ und liefert nach genau N Taken den komplexen Eingangswert

$$\sum_{k=0}^{N-1} H_k H_{k-1}^* = x + jy, \qquad (7)$$

aus dem mit Hilfe der Schaltungseinheit 6 die gewünschte Korrekturinformation zur Synchronisierung des Empfängers abgeleitet wird.

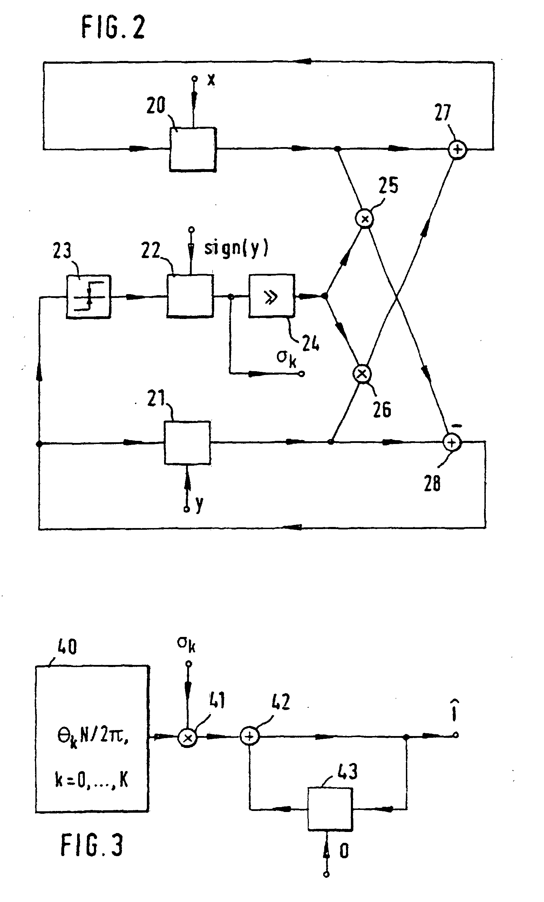

Die Umsetzung des komplexen Summensignals am Ausgang des Addierers 4 in die gewünschte Korrekturinformation ist auf vorteilhafte Weise mit Hilfe eines modifizierten CORDIC-Algorithmus möglich, zu dem eine bevorzugte Ausführungsform in den Figuren 2 und 3 dargestellt ist.

Figur 2 stellt eine Realisierung für den eigentlichen CORDIC-Algorithmus dar. Der Ausgang eines dritten Speicherelementes 20 ist zum einen mit einem zweiten Multiplizierer 25 und einem zweiten Addierer 27 verbunden, dessen zweiter Eingang mit dem Ausgang eines dritten Multiplizierers 26 in Verbindung steht. Das am Ausgang des zweiten Addierers 27 anstehende Summensignal ist auf den Eingang des dritten Speicherelementes 20 zurückgeführt. Analog ist der Ausgang eines vierten Speicherelementes 21 zum einen mit einem dritten Multiplizierer 26 und einem dritten Addierer 28 verbunden, dessen zweiter Eingang mit dem Ausgang des zweiten Multiplizierers 25 in Verbindung steht. Das am Ausgang des dritten Addierers 28 anstehende Summensignal ist zum einen auf den Eingang des vierten Speicherelementes 21 zurückgeführt, zum anderen einem Schwellwertentscheider 23 zur Bestimmung des Vorzeichens des anliegenden Wertes zugeführt. Der Ausgang des Schwellwertentscheiders 23 ist mit einem fünften Speicher 22 verbunden, dessem Ausgang mit einem Shifter 24 in Verbindung steht, der der Verschiebung des anstehenden Wertes um eine vorgebbare Zahl k von Stellen dient. Das geshiftete Signal ist jeweils den zweiten Eingängen der Multiplizierer (25,26) zugeführt, die im vorliegenden Fall vorteilhaft als Schieberegister ausgeführt sind. Die den Phasenwinkel Θ des am Eingang anliegenden komplexen Summenwertes repräsentierende Vorzeichenfolge $\sigma_k$ ist am Ausgang des dritten Speichers 22 abgreifbar.

Die Initialisierung der CORDIC-Schaltung gemäß Figur 2 erfolgt mit dem komplexen Summenwert x+j*y*, der wie oben beschrieben durch die Schaltung nach Figur 1 zur Verfügung gestellt wird. Die Speicher (20, 21, 22) werden dazu zu Beginn des Ablaufs zurückgesetzt und mit den Werten x entsprechend dem Realteil des Summenwertes für den dritten Speicher 20, y entsprechend dem Imaginärteil der Summe für den vierten Speicher 21 und sign(y) entsprechend dem Vorzeichen des Imaginäteils der Summe für den fünften Speicher 22 initialisiert. Die weitere Funktionsweise des CORDIC-Algorithmus ist in den Schriften

- J. E. Volder: "The Cordic trigonometric computing technique", IRE Trans. Electronic Computers, vol. 8, pp. 330 - 334, 1959 und
- J. S. Walther: "A unified algorithm for elementary functions", Spring Joint Computer Conference, pp. 379-385, 1971

näher erläutert.

Eine voreingestellte Anzahl K von Iterationen des CORDIC-Algorithmus liefert eine Folge von (K+1) Vorzeichenwerten $\sigma_k$, k=0, ...,K, die die Werte -1 und 1 annehmen können, und die eine Darstellung des gesuchten Winkels Θ gemäß

$$\Theta \approx \sum_{k=0}^{K} \sigma_k \Theta_k \qquad\qquad (8)$$

sind. Die Genauigkeit der Approximation wird durch die Anzahl K an Iterationen der Schaltung nach Figur 2 festgelegt. Überschlagsmäßig kann hierbei davon ausgegangen werden, daß die Genauigkeit der Approximation (in Bit) durch die Anzahl K gegeben ist.

Die Umsetzung der durch den CORDIC-Algorithmus gewonnen Vorzeichenfolge kann mit Hilfe des Zusammenhangs

$$\hat{l} = \frac{N}{2\pi}\Theta \approx \sum_{k=0}^{K} \frac{N}{2\pi}\Theta_k \sigma_k \qquad\qquad (9)$$

erfolgen. Eine geeignete Schaltung zur Umsetzung der Vorzeichenfolge $\sigma_k$, k=0,...,K ist in Figur 3 angegeben. In einer Tabelle 40 ist eine Folge $\frac{N}{2\pi}\Theta_k$, k=0,...,K von mit der Konstanten (N/2π) multiplizierten Elementarwinkeln $\Theta_k$ abgelegt ist, wobei die Elementarwinkel $\Theta_k$ durch den Zusammenhang

$$\Theta_k = \begin{cases} \pi/2 & k=0 \\ \arctan(2^{-k}) & k>0 \end{cases} \qquad\qquad (10)$$

gegeben sind. Der Ausgang der Tabelle 40 ist mit einem vierten Multiplizierer 41 verbunden, dessen zweitem Eingang die durch den CORDIC-Algorithmus bestimmte Vorzeichenfolge $\sigma_k$ zuführbar ist. Der Ausgang des vierten Multiplizierers ist mit dem Eingang eines vierten Addierers 42 verbunden, an dessen zweiten Eingang das über einen sechsten Speicher 43 rückgekoppelte Summensignal des vierten Addierers 42 anliegt. Das Summensignal entspricht nach Abschluß der Iterationen dem gewünschten Korrektursignal.

Die Schaltungsanordnung nach Figur 3 funktioniert folgendermaßen. Die Tabelle 40 wird sequentiell zu diskreten Zeiten, die durch einen extern erzeugten Takt bestimmt werden, ausgelesen, und die Werte $\frac{N}{2\pi}\Theta_k$ werden in dem vierten Multiplizierer 41 mit dem entsprechenden Vorzeichen $\sigma_k$ bewertet. Die Folge $\sigma_k$ von Vorzeichenwerten wird dabei mit Hilfe des CORDIC-Algorithmus berechnet. Schließlich werden die gewichteten Tabellenwerte in dem vierten Addierer 42 zu der rückgekoppelten und im sechsten Speicherelement 43 um eine Taktperiode verzögerten Summe hinzuaddiert, so daß nach K Takten die am Ausgang des Addierers 42 anstehende Summe der gewünschten Korrekturgröße entspricht.

Eine Vereinfachung der in Figur 3 angegebenen Schaltung kann durch eine weitere Approximation erfolgen. Hierbei wird

$$\hat{l} \approx \frac{N}{2}\left(-1 + \sum_{k=0}^{K} \delta_k 2^{-k}\right) \quad mit \quad \delta_k = (1+\sigma_k)/2 \qquad (11)$$

gesetzt. Diese Näherung resuliert aus der Beobachtung, daß $\Theta_k \approx \pi/2^{(k+1)}$ *für* $k \geq 0$. Beziehung (11) ist nahezu ohne Aufwand realisierbar, da es sich im wesentlichen um eine Zweierkomplementdarstellung für *l* basierend auf den Bits $\delta_k$ handelt.

**Patentansprüche**

1. Verfahren zur genauen zeitlichen Synchronisierung eines Empfängers für digitale Signale, insbesondere eines DAB-Empfängers, wobei eine Korrekturgröße zur Synchronisierung des Empfängers aus den empfangenen Signalen abgeleitet wird, und wobei die Korrelation eines übertragenen Referenzsignals mit einem im Empfänger abgespeicherten Referenzsignal ermittelt wird,
   **dadurch gekennzeichnet,**
   **daß** zur Bestimmung der Korrekturgröße der aus dem empfangenen Signal abgeleitete Schwerpunkt der quadrierten Kanalimpulsanwort verwendet wird,
   und **daß** der Schwerpunkt der quadrierten Kanalimpulsantwort direkt aus Abtastwerten der Schätzung der durch die Korrelation gewonnenen Kanalfrequenzantwort bestimmt wird.

2. Verfahren nach Anspruch 1,
   **dadurch gekennzeichnet,**
   **daß** eine Näherung für den Schwerpunkt der quadrierten Kanalimpulsantwort aus dem Produkt eines Phasenwinkels $\Theta$, mit einer Konstanten $N/2\pi$ berechnet wird, wobei der Phasenwinkel $\Theta$ aus den Abtastwerten der Kanalfrequenzantwort bestimmt wird, und N die Zahl der Abtastwerte der Kanalfrequenzantwort ist.

3. Verfahren nach Anspruch 2,
   **dadurch gekennzeichnet,**
   **daß** zur Bestimmung des Phasenwinkels $\Theta$ der CORDIC-Algorithmus verwendet wird.

4. Verfahren nach Anspruch 1,
   **dadurch gekennzeichnet,**
   **daß** eine Näherung für den Schwerpunkt der Kanalimpulsantwort durch Aufsummieren von in einer Tabelle abgelegten mit einer Konstanten $N/2\pi$ multiplizierten Elementarwinkeln $\Theta_k$,
   die mit Vorzeichenwerten $\sigma_k$ gewichtet werden, berechnet wird, wobei die Vorzeichenwerte $\sigma_k$ sukzessive über den CORDIC-Algorithmus bestimmt werden.

5. Verfahren nach Anspruch 1,
   **dadurch gekennzeichnet,**
   **daß** eine weitere Näherung für den Schwerpunkt der Kanalimpulsantwort durch Summation von mit Zweierpotenzen gewichteten Vorzeichenwerten $\delta_k$, die durch Umsetzung in den Wertebereich 0,1 aus den Vorzeichen $\sigma_k$ gebildet werden, und anschließende Multiplikation mit einer Konstanten N/2 berechnet wird.

6. Vorrichtung zur Bestimmung einer Korrekturinformation zur genauen zeitlichen Synchronisierung eines Empfänger für digitale Signale, insbesondere eines DAB-Empfängers,
   **dadurch gekennzeichnet,**
   **daß** einem Eingang eines Multiplizierers (3) die Abtastwerte ($H_k$) der Kanalfrequenzantwort sukzessive zuführbar sind, und diese darüber hinaus der Hintereinanderschaltung einem Speicherelement (1) und einer Schaltung (2) zur Bildung des konjugiert Komplexen des Eingangssignals zugeführt sind, und die so entstandene Folge von konjugiert Komplexen und um eine Taktperiode verzögerten Abtastwerten der Kanalfrequenzantwort einem zweiten Eingang des Multiplizierers (3) zugeführt sind, wobei die Folge von Ausgangswerten des Multiplizierers (3) einem Summierer (4) zugeführt sind, auf dessen zweiten Eingang die in einem zweiten Speicherelement (5) um eine Taktperiode verzögerten Summenwerte zurückgekoppelt sind, wobei die Summenwerte sukzessive einer Schaltungseinheit (6) zugeführt sind, in der ein Algorithmus zur Bestimmung des Phasenwinkels des zugeführten Summenwertes implementiert ist, so daß am Ausgang der Schaltungseinheit (6) eine Näherung für den Schwerpunkt der quadrierten Kanalimpulsantwort ansteht.

**7.** Vorrichtung nach Anspruch 6,
**dadurch gekennzeichnet,**
**daß** in der Schaltungseinheit (6) zur Bestimmung des Phasenwinkels des zugeführten Summenwertes der CORDIC-Algorithmus implementiert ist.

**8.** Vorrichtung nach Anspruch 7,
**dadurch gekennzeichnet,**
**daß** in einer Tabelle (40) abgelegte, mit einer Konstanten ($N/2\pi$) multiplizierte Elementarwinkel ($\Theta_k$) sukzessive einem vierten Multiplizierer (41) zugeführt und dort mit einer aus der Folge von Abtastwerten $H_k$ der Kanalfrequenzantwort berechneten Vorzeichenfolge ($\delta_k$) gewichtet sind, und die so entstandene Wertefolge in einem vierten Addierer (42) dem um eine Taktzeit zurückliegenden, durch Rückkopplung des Summationsergebnisses über ein sechstes Speicherglied (43) auf einen zweiten Eingang des vierten Addierers (42) aufaddierbar ist, wobei das Ausgangssignal des Addiereres nach Abschluß der Iteration nach einer vorgebbaren Zahl (K) von Taktzeiten eine Näherung für den Schwerpunkt der Kanalimpulsanwort ist.

**Claims**

**1.** Method for precisely synchronizing the timing in a receiver for digital signals, particularly in a DAB receiver, where a correction variable for synchronizing the receiver is derived from the signals received, and where the correlation between a transmitted reference signal and a reference signal which is stored in the receiver is ascertained,
**characterized**
**in that** the correction variable is determined using the squared channel impulse response's centre of distribution derived from the received signal,
and **in that** the squared channel impulse response's centre of distribution is determined directly from samples of the estimate of the channel frequency response obtained through the correlation.

**2.** Method according to Claim 1,
**characterized**
**in that** an approximation of the squared channel impulse response's centre of distribution is calculated from the product of a phase angle $\Theta$ and a constant $N/2\pi$, where the phase angle $\Theta$ is determined from the samples of the channel frequency response, and N is the number of samples of the channel frequency response.

**3.** Method according to Claim 2,
**characterized**
**in that** the phase angle $\Theta$ is determined using the CORDIC algorithm.

**4.** Method according to Claim 1,
**characterized**
**in that** an approximation of the channel impulse response's centre of distribution is calculated by summing elemental angles $\Theta_k$ which are stored in a table, are multiplied by a constant $N/2\pi$ and are weighted using arithmetic-sign values $\sigma_k$, the arithmetic-sign values $\sigma_k$ being determined in succession using the CORDIC algorithm.

**5.** Method according to Claim 1,
**characterized**
**in that** a further approximation of the channel impulse response's centre of distribution is calculated by summing arithmetic-sign values $\sigma_k$ which are weighted using powers of two and are formed from the arithmetic signs $\sigma_k$ as a result of conversion into the value range 0.1, and subsequently multiplying them by a constant $N/2$.

**6.** Apparatus for determining correction information for precisely synchronizing the timing in a receiver for digital signals, particularly in a DAB receiver,
**characterized**
**in that** an input on a multiplier (3) can be supplied with the channel frequency response's samples ($H_k$) in succession, and these are also supplied to the series circuit comprising a storage element (1) and a circuit (2) for forming the complex conjugate of the input signal, and the resultant sequence of complex conjugates and samples of the channel frequency response which are delayed by one clock period is supplied to a second input on the multiplier (3), with the sequence of output values from the multiplier (3) being supplied to a summing element (4) to whose second input the summed values delayed by one clock period in a second storage element (5) are fed back, the summed values being supplied in succession to a circuit unit (6) in which an algorithm for determining the phase angle of the summed value supplied is implemented, so that the output of the circuit unit (6) produces an approximation of the squared channel impulse response's centre of distribution.

7. Apparatus according to Claim 6,
   **characterized**
   **in that** the CORDIC algorithm is implemented in the circuit unit (6) for determining the phase angle of the summed value supplied.

8. Apparatus according to Claim 7,
   **characterized**
   **in that** elemental angles ($\Theta_k$) which are stored in a table (40) and are multiplied by a constant ($N/2\pi$) are supplied in succession to a fourth multiplier (41) where they are weighted using an arithmetic-sign sequence ($\delta_k$) calculated from the sequence of samples $H_k$ of the channel frequency response, and the resultant value sequence can be added in a fourth adder (42) to the which is one clock period in the past and by feeding back the summation result to a second input on the fourth adder (42) via a sixth storage element (43), the output signal from the adder being an approximation of the channel impulse response's centre of distribution following termination of the iteration after a prescribable number (K) of clock periods.

**Revendications**

1. Procédé de synchronisation précise dans le temps d'un récepteur de signaux numériques, notamment d'un récepteur DAB, la grandeur de correction pour la synchronisation du récepteur étant déduite à partir des signaux reçus, et la corrélation d'un signal de référence transmis étant déterminée avec un signal de référence enregistré dans le récepteur,
   **caractérisé en ce que**
   pour déterminer la grandeur de correction on utilise le centre de gravité de la réponse d'impulsion de canal élevée au carré déduit à partir du signal reçu, et le centre de gravité de la réponse d'impulsion de canal élevée au carré est déterminé directement à partir de valeurs de balayage de l'estimation de la réponse de fréquence de canal obtenue par la corrélation.

2. Procédé selon la revendication 1,
   **caractérisé en ce qu'**
   une approximation du centre de gravité de la réponse d'impulsion de canal élevée au carré est calculée à partir du produit d'un angle de phase ($\Phi$) avec une constante $N/2\pi$, l'angle de phase ($\Phi$) étant déterminé à partir des valeurs de balayage de la réponse de fréquence de canal et N étant le nombre des valeurs de balayage de la réponse de fréquence de canal.

3. Procédé selon la revendication 2,
   **caractérisé en ce que**
   pour déterminer l'angle de phase ($\Phi$) on utilise l'algorithme de CORDIC.

4. Procédé selon la revendication 1,
   **caractérisé en ce qu'**
   une approximation du centre de gravité de la réponse d'impulsion de canal est calculée par totalisation d'angles élémentaires ($\Phi$)$_k$ multipliés par une constante $N/2\pi$ déposés dans un tableau, qui sont pondérés avec des valeurs de signe $\sigma_k$, les valeurs de signe $\sigma_k$ étant déterminées successivement par l'algorithme de CORDIC.

5. Procédé selon la revendication 1,

EP 0 861 549 B1

**caractérisé en ce qu'**

une autre approximation du centre de gravité de la réponse d'impulsion de canal est calculée par addition de valeurs de signe pondérées par des puissances à base deux $\delta_k$ formées par conversion dans la plage de valeurs de 0,1 à partir des signes $\sigma_k$ puis par multiplication avec une constante N/2.

6. Dispositif pour déterminer une information de correction pour la synchronisation précise dans le temps d'un récepteur de signaux numériques, notamment d'un récepteur DAB,

   **caractérisé en ce que**

   les valeurs de balayage ($H_k$) de la réponse de fréquence de canal peuvent être transmises successivement à une entrée d'un multiplicateur (3), celles-ci étant en outre transmises à un circuit en série d'un élément de mémoire (1) et à un circuit (2) pour former le complexe conjugué du signal d'entrée, et la succession ainsi obtenue de complexes conjugués et de valeurs de balayage retardées d'une période d'horloge de la réponse de fréquence de canal est transmise à une deuxième entrée du multiplicateur (3), la succession de valeurs de sortie du multiplicateur (3) étant transmise à un additionneur (4), sur la deuxième entrée duquel les valeurs additionnées retardées d'une période d'horloge dans un deuxième élément de mémoire (5) sont renvoyées, les valeurs additionnées étant successivement transmises à une unité de commutation (6) dans laquelle est implémenté un algorithme pour déterminer l'angle de phase de la valeur additionnée transmise, de telle sorte que l'on obtient à la sortie de l'unité de commutation (6) une approximation du centre de gravité de la réponse d'impulsion de canal élevée au carré.

7. Dispositif selon la revendication 6,

   **caractérisé en ce que**

   dans l'unité de commutation (6) pour déterminer l'angle de phase de la valeur d'addition transmise, l'algorithme de CORDIC est implémenté.

8. Dispositif selon la revendication 7,

   **caractérisé en ce que**

   des angles élémentaires ($\Phi)_k$ multipliés par une constante ($N/2\pi$) déposés dans un tableau (40) sont transmis successivement à un quatrième multiplicateur (41) puis pondérés avec une succession de signes ($\delta_k$) calculée à partir de la succession de valeurs de balayage $H_k$ de la réponse de fréquence de canal, et la succession de valeurs ainsi obtenue peut être additionnée dans un quatrième additionneur (42) à la valeur retardée d'une période d'horloge par renvoi du résultat d'addition par l'intermédiaire d'un sixième organe de mémoire (43) sur une deuxième entrée du quatrième additionneur (42), le signal de sortie de l'additionneur, au terme de l'itération après un nombre (K) définissable de périodes d'horloge, étant une approximation du centre de gravité de la réponse d'impulsion de canal.

9

FIG.1

FIG. 2

FIG. 3